# FASCICULE DE BREVET EUROPEEN

(11) **EP 1 242 309 B1**
(45) Date de publication et mention de la délivrance du brevet: **15.10.2003**
(21) Numéro de dépôt: 00993705.3
(22) Date de dépôt: 14.12.2000
(51) Int. Cl.: C01B 35/12, C01F 17/00, C09K 11/77, H05B 33/14, H01J 61/46, H01J 17/49, H01J 1/63

(54) **PROCEDE DE PREPARATION DE BORATES DE TERRE RARE ET UTILISATION DES BORATES OBTENUS EN LUMINESCENCE**
VERFAHREN ZUR HERSTELLUNG VON SELTENERDBORATEN UND VERWENDUNG DER HERGESTELLTEN BORATEN IN LUMINESZENZ
METHOD FOR PRODUCING RARE EARTH BORATES AND USE OF THE RESULTING BORATES IN LUMINESCENCE

(30) Priorité: 29.12.1999 FR 9916644
(43) Date de publication de la demande: 25.09.2002
(73) Titulaire: Rhodia Terres Rares, 17041 La Rochelle Cédex (FR)
(72) Inventeur: BRACONNIER, Jean-Jacques, F-17140 Lagord (FR); GOUBARD, Muriel, F-75011 Paris (FR)
(74) Mandataire: Dubruc, Philippe
(86) Numéro de dépôt international: FR0003525
(87) Numéro de publication internationale: WO01049605

(56) Documents cités:
- FR-A- 2 743 555
- FR-A- 2 752 833

## Description

La présente invention concerne un procédé de préparation de borates de terre rare et l'utilisation de ces borates en luminescence.

Les domaines de la luminescence et de l'électronique connaissent actuellement des développements importants. On peut citer comme exemple de ces développements, la mise au point des systèmes à plasma (écrans et lampes) pour les nouvelles techniques de visualisation et d'éclairage. Une application concrète est celle du remplacement des écrans de télévision actuels par des écrans plats. Ces nouvelles applications nécessitent des matériaux luminophores présentant des propriétés de plus en plus adaptées. Les borates de terres rares constituent des matériaux de ce type.

On connaît un procédé de préparation de ces borates par réaction avec de l'acide borique d'un carbonate ou d'un hydroxycarbonate de terre rare préalablement préparé. Un tel procédé est décrit dans la demande de brevet publiée WO 97/26312. Ce procédé permet d'obtenir des produits de morphologie spécifique. Toutefois, le besoin s'est fait sentir de disposer d'un procédé encore amélioré pouvant présenter notamment des durées de réaction encore plus réduites.

En outre, il est important que les borates présentent une bonne pureté phasique pour être utilisés dans les applications mentionnées plus haut.

L'objet de l'invention est donc de fournir un procédé amélioré permettant notamment de conduire à des borates de terre rare et de cérium phasiquement purs.

Dans ce but, le procédé de préparation d'un borate de terre rare selon l'invention est caractérisé en ce qu'il comprend les étapes suivantes :
- on mélange de l'acide borique et un sel de terre rare;
- on fait réagir le mélange ainsi obtenu avec un carbonate ou un bicarbonate;
- on calcine le précipité obtenu.

L'invention concerne aussi un procédé de préparation d'un hydroxyborocarbonate de terre rare, précurseur d'un borate de terre rare, caractérisé en ce qu'il comprend les étapes suivantes :
- on mélange de l'acide borique et un sel de terre rare;
- on fait réagir le mélange ainsi obtenu avec un carbonate ou un bicarbonate;
- on récupère le précipité ainsi obtenu.

D'autres caractéristiques, détails et avantages de l'invention apparaîtront encore plus complètement à la lecture de la description qui va suivre, ainsi que des divers exemples concrets mais non limitatifs destinés à l'illustrer.

Le procédé de l'invention concerne la préparation de borates ou d'hydroxyborocarbonates de terre rare. Par terre rare on entend pour l'ensemble de la présente description les éléments du groupe constitué par l'yttrium, le scandium et les éléments de la classification périodique de numéro atomique compris inclusivement entre 57 et 71.

Par borate de terre rare on entend les produits de formule LnBO₃ (orthoborate), Ln désignant la terre rare telle que définie ci-dessus. Par hydroxyborocarbonate de terre rare on entend les produits de formule LnB(OH)_{Z}(CO₃)_{y}, cet hydroxyborocarbonate pouvant être plus ou moins hydraté. Il est entendu que le procédé de la présente invention s'applique aussi à la préparation de borates ou hydroxyborocarbonates mixtes de terres rares, de formules données ci-dessus et dans lesquelles Ln est constitué d'un mélange de deux ou plusieurs terres rares. Le procédé de la présente invention peut être utilisé tout particulièrement pour la préparation d'un borate ou d'un hydroxyborocarbonate d'yttrium, de lanthane, de lutécium, de scandium ou de gadolinium. On peut aussi mentionnner plus particulièrement la préparation d'un borate d'ytterbium ou de cérium.

Le procédé s'applique de même à la préparation de borates de terre rare dopés ou substitués de formule Ln₁₋ₓMₓBO₃ dans laquelle M représente un élément dopant ou substituant, Cet élément dopant ou substituant a pour but de donner au borate des propriétés de luminescence ou de les renforcer et il peut être choisi dans le groupe comprenant l'aluminium, le silicium, l'antimoine, le bismuth, les terres rares et notamment dans ce cas le cérium, le terbium, le lanthane, le gadolinium, l'europium, le thulium, l'erbium et le praséodyme. La valeur de x peut aller jusqu'à 0,5. Comme des terres rares figurent dans ce groupe, il va de soi que la terre rare utilisée à titre de dopant ou substituant sera différente de la terre rare constitutive du borate. Le procédé de l'invention s'applique bien entendu à la préparation des hydroxyborocarbonates précurseurs des borates dopés ou substitués précités.

Le procédé de l'invention comprend une première étape dans laquelle on mélange un sel de terre rare et l'acide borique. Le sel de terre rare peut être un sel inorganique ou organique. On utilise de préférence les sels solubles dans l'eau. Comme sel de terre rare on peut citer plus particulièrement le nitrate. Dans le cas de la préparation de borates ou hydroxyborocarbonates mixtes on utilisera bien entendu un sel de chacune des terres rares concernées.

Dans le cas de la préparation d'un borate dopé ou substitué ou de son précurseur hydroxyborocarbonate, on peut former un mélange du sel de terre rare et d'acide borique qui comprend, en outre, un sel de l'élément dopant ou substituant et ce qui a été dit plus haut pour les sels de terre rare s'applique aussi ici.

L'acide borique peut être utilisé sous forme d'une solution ou, de préférence, sous forme solide.

Selon une variante de l'invention, le mélange peut se faire avec un mélangeur rapide. On entend par là tout système permettant une introduction rapide des réactifs dans le réacteur, notamment par un système à piston, et une mise en contact rapide et homogène de ces réactifs. On peut utiliser ainsi comme mélangeur de ce type un tube à géométrie en Y.

Le mélange peut être effectué à température ambiante ou bien en chauffant.

Le mélange ainsi obtenu étant acide, il peut être neutralisé jusqu'à une valeur de pH de 4 ou d'environ 4, par exemple par addition d'une solution d'ammoniaque.

La deuxième étape du procédé de l'invention consiste à faire réagir le mélange obtenu à l'étape précédente avec un carbonate ou un bicarbonate (le carbonate ou le bicarbonate doit être soluble dans l'eau).

Comme carbonate ou bicarbonate, on peut mentionner les carbonates alcalins. On peut utiliser plus particulièrement le carbonate ou bicarbonate d'ammonium.

Selon une variante de l'invention, on effectue la réaction en présence d'une base. Comme base utilisable on peut citer les hydroxydes d'alcalins ou d'alcalino-terreux, l'ammoniaque, les amines secondaires, tertiaires ou quaternaires. On utilise de préférence l'ammoniaque.

On notera que, dans le cas de la préparation d'un borate, ou de son précurseur, comprenant un dopant ou substituant, le sel du dopant ou substituant peut être introduit aussi lors de la réaction si cela n'a pas été fait au cours de l'étape précédente.

Selon un mode de réalisation préféré de l'invention, on réalise la réaction en régulant le pH. On entend par là que l'on règle le pH du milieu réactionnel à une valeur fixée. Cette régulation peut se faire en jouant sur la quantité de base utilisée pour la réaction. Cette valeur fixée est de préférence comprise entre 4 et 6.

La réaction peut se faire à température ambiante ou à chaud.

Une étape de mûrissement peut être réalisée ensuite. Cette étape consiste à maintenir le milieu réactionnel à une température donnée, de préférence à chaud, à un pH constant et à la valeur décrite précédemment, éventuellement sous atmosphère contrôlée. La durée de ce mûrissement est généralement d'au moins 15 minutes et d'au plus 8 heures.

A l'issue de la réaction on obtient un précipité qui est séparé du milieu réactionnel par tout moyen connu, par exemple par filtration et qui, éventuellement, est lavé puis séché.

On obtient ainsi un produit à base d'un hydroxyborocarbonate de terre rare qui peut comprendre en outre l'élément dopant ou substituant.

Pour obtenir le borate, on procède à une calcination.

Cette calcination se fait généralement à une température comprise entre 500°C et 1400°C, plus particulièrement entre 500 et 1100°C. Il est possible de réaliser cette calcination sous air ou sous des atmosphères réductrices (hydrogène par exemple) ou neutre (argon) ou des mélanges de celles-ci.

Selon une autre variante de l'invention, il est possible d'introduire à cette étape du procédé (calcination) le ou les éléments dopants ou substituants précités. On procède en mélangeant l'hydroxyborocarbonate obtenu précédemment avec le ou les éléments précités sous forme solide par exemple sous forme oxyde, carbonate, hydroxycarbonate, notamment sous forme SiO₂, Al₂O₃, Al(OH)CO₃.

Le borate obtenu peut se présenter sous forme de particules sphériques, cubiques ou parallélépipédiques.

Ces particules peuvent aussi présenter une taille qui varie dans de larges proportions. Selon un mode de réalisation préféré de l'invention, la taille moyenne de particules est d'au plus 10µm, plus particulièrement d'au plus 5µm et, encore plus particulièrement, elle peut être comprise entre 0,5 et 5µm. Les tailles mentionnées ici , sont déterminées par la technique de diffraction laser en utilisant un granulomètre du type COULTER (LS 230).

Les particules ont une morphologie homogène, c'est à dire que la majorité d'entre elles et, de préférence la totalité, ont cette même morphologie.

Le procédé de l'invention présente plusieurs avantages. La durée de réaction est réduite. Par ailleurs, il permet de travailler en milieu plus concentré avec des quantités de réactifs optimisées. En particulier, il permet de travailler avec une quantité de carbonate réduite ce qui entraîne l'absence de formation de mousse lors de la réaction.

Le procédé de l'invention permet notamment de préparer un borate de terre rare dopé au cérium. La teneur en cérium de ce borate peut être d'au plus 8% (x tel que défini plus haut d'au plus 0,08), elle peut être plus particulièrement comprise entre 1 et 5%.

Ce borate se présente sous la forme d'une phase pure. On entend par là que l'analyse RX du produit calciné à 1100°C ne montre qu'une seule phase qui correspond à la maille du borate de terre rare LnBO₃. Il n'y a pas de phase du type CeO₂. Cette pureté phasique implique que le cérium est stabilisé à l'état 3⁺ dans le borate.

Selon un mode de réalisation particulier, le borate comprend une terre rare constitutive, c'est à dire la terre rare qui forme avec le bore la matrice du produit et autre que le dopant ou substituant, qui est l'yttrium ou le gadolinium ou encore une combinaison des deux; dans ce dernier cas le borate est un borate mixte d'yttrium et de gadolinium.

Les borates tels qu'obtenus par le procédé décrit ci-dessus peuvent être utilisés comme luminophores. Ils peuvent être utilisés en particulier en luminescence basse tension, notamment dans la fabrication de tout dispositif mettant en oeuvre cette luminescence basse tension, comme les écrans avec effet de champ. Ils présentent en outre des propriétés de luminescence sous excitation électromagnétique dans le domaine des longueurs d'onde utilisées dans les systèmes à plasma et dans les lampes à vapeur de mercure. Ainsi, ils peuvent être utilisés comme luminophores dans les systèmes à plasma (écran de visualisation ou système d'éclairage) ou dans les lampes trichromatiques.

Enfin, l'invention concerne aussi les dispositifs luminescents, du type écrans avec effet de champ par exemple, incorporant les borates décrits plus haut ou tels qu'obtenus par le procédé de l'invention. Dans ces dispositifs, les luminophores sont disposés sur les écrans soumis à l'excitation de basse énergie. De même, l'invention concerne les systèmes à plasma dans la fabrication desquels les borates peuvent rentrer. La mise en oeuvre des luminophores dans la fabrication des dispositifs à luminescence basse tension ou des systèmes à plasma se fait selon des techniques bien connues par exemple par sérigraphie, électrophorèse ou sédimentation.

Des exemples vont maintenant être donnés.

### EXEMPLE 1

Une solution est constituée par un mélange de nitrates d'yttrium, de gadolinium et d'europium, de composition suivante (en % atomique) :
Y : 72%
Gd : 23%
Eu : 5%

Dans un réacteur contenant de l'eau déminéralisée, on mélange de l'acide borique cristallisé, et la solution de nitrates de terre rare (TR), dans des proportions telles que le rapport molaire B/TR soit égal à 1,5. On neutralise ensuite le mélange ainsi formé à pH 4,4 par de l'ammoniaque 6N, puis la concentration du mélange est ajustée à 0,6 mole/litre en éléments TR par ajout d'eau.

Sur 2,8 litres de la solution précédente, agitée et chauffée à 60°C, on ajoute progressivement en 54 minutes une solution précipitante de bicarbonate d'ammonium à une concentration de 1,34 mole/litre en NH₄HCO₃, et d'ammoniaque à 0,7 mole/litre. Durant cet ajout, le pH est maintenu à une valeur d'au moins 4,6 par ajout d'ammoniaque 6N. L'ajout de la solution précipitante est arrêtée dès que le pH du mélange atteint la valeur de 5, la concentration en terre rare du mélange obtenu est de 0,39 mole/litre.

Durant toute la réaction, la température du milieu réactionnel est maintenue constante et égale à 60°C.

Ce mélange est ensuite maintenu chauffé et agité pendant 40 minutes.

Le précipité est ensuite filtré sur Büchner, puis lavé par 2 litres de solution froide d'acide borique à 2g/litre (0,03mole-litre).

Le solide obtenu est séché à 60°C pendant 1 nuit, puis calciné à 900°C pendant 1 heure 15 minutes.

La poudre obtenue après légère désagglomération, correspond, par analyse par diffraction des rayons X, à un orthoborate de terre rare pur, LnBO₃, (Ln= Y, Gd, Eu) avec des particules de forme sphérique, comme le montre l'analyse par microscopie électronique à balayage.

### EXEMPLE 2 COMPARATIF

On part de la même solution de nitrates de terres rares que dans l'exemple 1 qui est aussi neutralisée comme dans cet exemple et amenée à une concentration de 0,7mole/litre en éléments TR.

Dans un réacteur convenablement agité et chauffé à 60°C, contenant 1,5 litres de la solution précédente, on ajoute progressivement en 1 heure une solution précipitante contenant du bicarbonate d'ammonium à une concentration de 1,3 mole/litre en NH₄HCO₃, et de l'ammoniaque à 0,74 mole/litre.

La quantité de solution de bicarbonate ajoutée est telle que le rapport molaire HCO₃⁻/TR est égal à 1,6.

Puis, dans la suspension toujours maintenue chaude et agitée, on ajoute en 30 minutes une solution d'acide borique à 0,8 mole H₃BO₃/litre, tel que le rapport molaire B/TR est égal à 1,5.

Ce mélange est ensuite maintenu chauffé à 60°C et agité pendant 2 heures 50 minutes, tout en régulant son pH à 4,6 par ajout d'ammoniaque 6N. La concentration de la suspension obtenue est alors de 0,22 mole LnBO₃/litre.

Le précipité est ensuite filtré sur Büchner, puis lavé par 2 litres d'eau froide.

Le solide obtenu est séché à 60°C pendant 1 nuit, puis calciné à 900°C pendant 1 heure.

La poudre obtenue après légère désagglomération, correspond, par analyse par diffraction des rayons X, à un orthoborate de terre rare pur, LnBO3 avec des particules de forme cubique, comme le montre l'analyse par microscopie électronique à balayage.

On note que la durée du procédé, calculée de la préparation de la solution de carbonates de terre rare à partir de la solution des nitrates jusqu'à la filtration du précipité, est beaucoup plus élevée dans le cas de l'exemple 2 (4H20) que dans le cas de l'exemple 1 (1 H34).

## Revendications

1. Procédé de préparation d'un borate de terre rare, **caractérisé en ce qu'**il comprend les étapes suivantes :
- on mélange de l'acide borique et un sel de terre rare;
- on fait réagir le mélange ainsi obtenu avec un carbonate ou un bicarbonate;
- on calcine le précipité obtenu.

2. Procédé de préparation d'un hydroxyborocarbonate de terre rare, **caractérisé en ce qu'**il comprend les étapes suivantes :
- on mélange de l'acide borique et un sel de terre rare;
- on fait réagir le mélange ainsi obtenu avec un carbonate ou un bicarbonate;
- on récupère le précipité ainsi obtenu.

3. Procédé selon la revendication 1 ou 2, **caractérisé en ce qu'**on fait réagir le mélange précité avec un carbonate ou un bicarbonate en présence d'une base.

4. Procédé selon l'une des revendications précédentes, **caractérisé en ce qu'**on utilise un carbonate ou un bicarbonate d'ammonium.

5. Procédé selon l'une des revendications précédentes, **caractérisé en ce qu'**on utilise l'ammoniaque comme base.

6. Procédé selon l'une des revendications précédentes, **caractérisé en ce qu'**on utilise l'acide borique sous forme solide.

7. Procédé selon l'une des revendications précédentes, **caractérisé en ce qu'**on règle le pH du milieu réactionnel de la réaction entre le mélange précité avec un carbonate ou un bicarbonate en présence d'une base à une valeur fixée, notamment comprise entre 4 et 6.

8. Procédé selon l'une des revendications précédentes, **caractérisé en ce qu'**on prépare un borate ou un hydroxyborocarbonate d'au moins une terre rare choisie dans le groupe comprenant l'yttrium, le gadolinium, le lanthane, le lutécium, l'ytterbium, le cérium et le scandium.

9. Procédé selon l'une des revendication précédente pour la préparation d'un borate ou d'un hydroxyborocarbonate de terre rare comprenant en outre au moins un élément dopant ou substituant, **caractérisé en ce qu'**on forme un mélange du sel de terre rare et d'acide borique qui comprend, en outre, un sel de l'élément dopant ou substituant ou **en ce qu'**on effectue la réaction en présence d'un sel dudit élément dopant ou substituant.

10. Procédé selon la revendication 9, **caractérisé en ce que** l'élément dopant ou substituant est choisi dans le groupe comprenant l'aluminium, le silicium, l'antimoine, le bismuth, les terres rares et notamment dans ce cas le cérium, le terbium, le lanthane, le gadolinium, l'europium, le thulium, l'erbium et le praséodyme.

11. Procédé selon l'une des revendications précédentes, **caractérisé en ce que** on effectue le mélange de l'acide borique et du sel de la terre rare avec un mélangeur rapide.

## Patentansprüche

1. Verfahren zur Herstellung eines Seltenerdborats, **dadurch gekennzeichnet, daß** es die folgenden Verfahrensschritte umfaßt:
- Man mischt Borsäure und ein Seltenerdsalz;
- man läßt die auf diese Weise erhaltene Mischung mit einem Carbonat oder einem Bicarbonat reagieren;
- man kalziniert den erhaltenen Niederschlag.

2. Verfahren zur Herstellung eines Seltenerdhydroxyborocarbonats, **dadurch gekennzeichnet, daß** es die folgenden Verfahrensschritte umfaßt:
- Man mischt Borsäure und ein Seltenerdsalz;
- man läßt die auf diese Weise erhaltene Mischung mit einem Carbonat oder einem Bicarbonat reagieren;
- man gewinnt den auf diese Weise erhaltenen Niederschlag.

3. Verfahren nach Anspruch 1 oder 2, **dadurch gekennzeichnet, daß** man die gefällte Mischung mit einem Carbonat oder einem Bicarbonat in Gegenwart einer Base reagieren läßt.

4. Verfahren nach einem der vorangehenden Ansprüche, **dadurch gekennzeichnet, daß** man ein Ammoniumcarbonat oder -bicarbonat verwendet.

5. Verfahren nach einem der vorangehenden Ansprüche, **dadurch gekennzeichnet, daß** man Ammoniak als Base verwendet.

6. Verfahren nach einem der vorangehenden Ansprüche, **dadurch gekennzeichnet, daß** man die Borsäure in fester Form verwendet.

7. Verfahren nach einem der vorangehenden Ansprüche, **dadurch gekennzeichnet, daß** man den pH-Wert des Reaktionsmilieus der Reaktion zwischen der gefällten Mischung mit einem Carbonat oder einem Bicarbonat in Gegenwart einer Base auf einen festen Wert, insbesondere zwischen 4 und 6, einstellt.

8. Verfahren nach einem der vorangehenden Ansprüche, **dadurch gekennzeichnet, daß** man ein Borat oder ein Hydroxyborocarbonat mindestens einer Seltenen Erde, ausgewählt aus der Gruppe von Yttrium, Gadolinium, Lanthan, Lutetium, Ytterbium, Cer und Scandium, herstellt.

9. Verfahren nach einem der vorangehenden Ansprüche zur Herstellung eines Seltenerdborats oder -hydroxyborocarbonats, aufweisend außerdem mindestens ein dotierendes oder substituierendes Element, **dadurch gekennzeichnet, daß** man eine Mischung aus dem Seltenerdsalz und Borsäure herstellt, welche außerdem ein Salz des dotierenden oder substituierenden Elements umfaßt, und daß man die Reaktion in Gegenwart eines Salzes des dotierenden oder substituierenden Elements durchführt.

10. Verfahren nach Anspruch 9, **dadurch gekennzeichnet, daß** das dotierende oder substituierende Element ausgewählt ist aus der Gruppe von Aluminium, Silizium, Antimon, Wismuth, Seltenen Erden und insbesondere in diesem Fall Cer, Terbium, Lanthan, Gadolinium, Europium, Thulium, Erbium und Praseodym.

11. Verfahren nach einem der vorangehenden Ansprüche, **dadurch gekennzeichnet, daß** man die Mischung aus Borsäure und Seltenerdsalz mit einer schnellen Mischvorrichtung herstellt.

## Claims

1. Process for the preparation of a rare earth borate, **characterized in that** it comprises the following stages:
- mixing boric acid with a rare earth salt;
- reacting the mixture with a carbonate or a bicarbonate;
- calcining the precipitate obtained.

2. Process for the preparation of a rare earth hydroxyborocarbonate, **characterized in that** it comprises the following stages:
- mixing boric acid with a rare earth salt;
- reacting the mixture with a carbonate or a bicarbonate;
- recovering the precipitate thus obtained.

3. Process according to claim 1 or 2, **characterized in that** the aforementioned mixture is reacted with a carbonate or a bicarbonate in the presence of a base.

4. Process according to one of the preceding claims, **characterized in that** ammonium carbonate or bicarbonate is used.

5. Process according to one of the preceding claims, **characterized in that** ammonium hydroxide is used as the base.

6. Process according to one of the preceding claims, **characterized in that** boric acid is used in the form of a solid.

7. Process according to one of the preceding claims, **characterized in that** the pH of the reaction medium of the reaction between the aforementioned mixture with a carbonate or a bicarbonate in the presence of a base is adjusted to a fixed value which is particularly comprised between 4 and 6.

8. Process according to one of the aforementioned claims, **characterized in that** a borate or a hydroxyborocarbonate of at least one rare earth chosen from the group containing yttrium, gadolinium, lanthanum, lutecium, ytterbium, cerium, and scandium is prepared.

9. Process, according to one of the preceding claims, for the preparation of a rare earth borate or a hydroxyborocarbonate containing in addition at least one doping element or a substituent, **characterized in that** a mixture of a rare earth salt and boric acid is formed, which moreover comprises a salt of the doping element or substituent, or **in that** the reaction is carried out in the presence of a salt of said doping element or substituent.

10. Process, according to claim 9, **characterized in that** the doping element or substituent is chosen from the group containing aluminium, silicon, antimony, bismuthe, the rare earths, and in particular in this case, cerium, terbium, lanthanum, gadolinium, europium, thulium, erbium, and praseodymium.

11. Process according to one of the preceding claims, **characterized in that** the mixing of boric acid with the rare earth salt is carried out using a high speed mixer.
